(19) Europäisches Patentamt
European Patent Office
Office européen des brevets

(11) Veröffentlichungsnummer : **0 686 670 A1**

(12) # EUROPÄISCHE PATENTANMELDUNG

(21) Anmeldenummer : **95108830.1**

(22) Anmeldetag : **08.06.95**

(51) Int. Cl.[6] : **C08L 83/04**

(30) Priorität : **08.06.94 DE 4420069**

(43) Veröffentlichungstag der Anmeldung : **13.12.95 Patentblatt 95/50**

(84) Benannte Vertragsstaaten : **AT BE CH DE ES FR GB IT LI NL**

(71) Anmelder : **Wacker-Chemie GmbH
Hanns-Seidel-Platz 4
D-81737 München (DE)**

(72) Erfinder : **Stepp, Michael, Dr.
Mehringer Strasse 4
D-84489 Burghausen (DE)**
Erfinder : **Oberneder, Stefan, Dr.
Kapuzinergasse 237
D-84489 Burghausen (DE)**
Erfinder : **Pilzweger, Erich
Elisabethstrasse 10
D-84387 Julbach (DE)**

(74) Vertreter : **Budczinski, Angelika et al
c/o Wacker-Chemie GmbH,
Hanns-Seidel-Platz 4
D-81737 München (DE)**

(54) **Unter Abspaltung von Alkoholen zu Elastomeren vernetzbare Organopolysiloxanmassen**

(57) Organopolysiloxanmassen, die unter Ausschluß von Wasser lagerfähig sind, bei Zutritt von Wasser jedoch schon bei Raumtemperatur unter Abspaltung von Alkoholen zu Elastomeren vernetzt werden können herstellbar unter Verwendung von

(A) $\alpha,\omega$-Dihydroxyorganopolysiloxan,

(B) Organosiliciumverbindung der allgemeinen Formel

$$[HSi(OR)_2O_{1/2}]_a[HSi(OR)O]_b[HSiO_{3/2}]_c[Si(OR)_3O_{1/2}]_d \quad (I),$$
$$[Si(OR)_2O]_e[Si(OR)O_{3/2}]_f[SiO_2]_g[R^1O]_h$$

wobei

R, $R^1$, a, b, c, d, e, f, g und h jeweils die in Anspruch 1 angegebene Bedeutung haben,
mit der Maßgabe, daß der Gehalt an Si-gebundenem Wasserstoff 0,1 bis 0,9 Gewichtsprozent, bezogen auf das Gesamtgewicht der Organosiliciumverbindung der Formel (I), beträgt sowie mindestens 20 % der Anzahl der Reste R in der Organosiliciumverbindung der Formel (I) die Bedeutung von einwertigem, gegebenenfalls substituierten Kohlenwasserstoffrest haben,

sowie gegebenenfalls weiteren Stoffen.

EP 0 686 670 A1

Jouve, 18, rue Saint-Denis, 75001 PARIS

Die Erfindung betrifft Organopolysiloxanmassen, die unter Ausschluß von Wasser lagerfähig sind, bei Zutritt von Wasser jedoch schon bei Raumtemperatur unter Abspaltung von Alkoholen zu Elastomeren vernetzt werden können, sowie die dabei verwendeten Vernetzer.

Der Begriff "Organopolysiloxane" soll im Rahmen dieser Erfindung sowohl polymere als auch oligomere und dimere Organosiloxane umfassen.

Organopolysiloxanmassen, die unter Abspaltung von Alkoholen zu Elastomeren vernetzbar sind, und Verfahren zu deren Herstellung sind vielfach bekannt. Hierzu sei beispielsweise auf US-A 3,334,067 (Dow Corning Corp.; ausgegeben am 1. August 1967) verwiesen, worin ein Verfahren zur Herstellung von bei Raumtemperatur vernetzbaren Organopolysiloxanmassen durch Vermischen von Hydroxylgruppen aufweisendem Organopolysiloxan mit Organyl(triorganyloxy)silan und Titanverbindung beschrieben ist. Solche Massen weisen jedoch im allgemeinen eine sehr geringe Vernetzungsgeschwindigkeit auf, so daß zur Beschleunigung Metallverbindungen als Kondensationskatalysator zugesetzt werden müssen. Zur Vermeidung der u.a. toxikologisch bedenklichen Metallverbindungen werden in WO 92/21724 (Wacker-Chemie GmbH; ausgegeben am 10. Dezember 1992) Massen beschrieben, die als Vernetzer Organosiliciumverbindungen mit Si-gebundenem Wasserstoff wie auch Organyloxygruppen enthalten, und bereits in Anwesenheit milder Kondensationskatalysatoren, wie Carbonsäuren, vernetzen. Ein Nachteil dieser H-Organyloxy-Vernetzer ist jedoch die bei längerer Lagerung aufgrund der Labilität der Si-H-Bindung auftretende Wasserstoffentwicklung. Die Wasserstoffentwicklung bei Lagerung der Massen kann einen Druckanstieg im Gebinde hervorrufen, der z.B. ein unerwünschtes Austreten der Masse beim Öffnen der Gebinde zur Folge haben kann. Darüberhinaus kann die Wasserstoffentwicklung Gaseinschlüsse in der Masse verursachen, die zu Verarbeitungsschwierigkeiten aufgrund von Inhomogenitäten führen.

Des weiteren werden in DE 41 17 471 A (Shin-Etsu Chem. Co., Ltd; ausgegeben am 29. Mai 1990) bzw. der entsprechenden US-A 5,166,293 Verbindungen der allgemeinen Formel $H\text{-}Si(OR)_2O[SiH(OR)O]_nSi(OR)_3$ mit R gleich gegebenenfalls substituierter Kohlenwasserstoffrest und n gleich 0 oder eine ganze Zahl beschrieben, welche durch Behandlung von Gemischen aus H-Trialkoxysilanen und Alkoholen mit Wasser erhältlich sind und als Primer-Vorstufen, Intermediate für Silan-Haftvermittler und Haftvermittler für vernetzbare Siliconkautschuke verwendet werden.

Gegenstand der vorliegenden Erfindung sind Organopolysiloxanmassen, die unter Ausschluß von Wasser lagerfähig sind, bei Zutritt von Wasser jedoch schon bei Raumtemperatur unter Abspaltung von Alkoholen zu Elastomeren vernetzt werden können herstellbar unter Verwendung von

(A) α,ω-Dihydroxyorganopolysiloxan,

(B) Organosiliciumverbindung der allgemeinen Formel

$$[HSi(OR)_2O_{1/2}]_a[HSi(OR)O]_b[HSiO_{3/2}]_c[Si(OR)_3O_{1/2}]_d$$
$$[Si(OR)_2O]_e[Si(OR)O_{3/2}]_f[SiO_2]_g[R^1O]_h \qquad (I),$$

wobei

R gleich oder verschieden sein kann und einen einwertigen, gegebenenfalls substituierten Kohlenwasserstoffrest oder Organosiliciumrest bedeutet,

$R^1$ gleich oder verschieden sein kann und einen zweiwertigen, gegebenenfalls substituierten organischen Rest bedeutet,

a, b, c, d, e, f, g und h jeweils unabhängig voneinander 0 oder eine Zahl größer 0 bedeuten,

mit der Maßgabe, daß der Gehalt an Si-gebundenem Wasserstoff 0,1 bis 0,9 Gewichtsprozent, bevorzugt 0,2 bis 0,8 Gewichtsprozent, besonders bevorzugt 0,3 bis 0,6 Gewichtsprozent, jeweils bezogen auf das Gesamtgewicht der Organosiliciumverbindung der Formel (I), beträgt sowie mindestens 20 % der Anzahl der Reste R in der Organosiliciumverbindung der Formel (I) die Bedeutung von einwertigem, gegebenenfalls substituierten Kohlenwasserstoffrest haben,

sowie gegebenenfalls weiteren Stoffen.

Bei den erfindungsgemäßen Organopolysiloxanmassen handelt es sich bei der Komponente (A) vorzugsweise um α,ω-Dihydroxydiorganopolysiloxan der allgemeinen Formel

$$HO\text{-}(\overset{\displaystyle R^2}{\underset{\displaystyle R^2}{\overset{|}{\underset{|}{Si}}}}\text{-}O)_nH \qquad (II),$$

worin $R^2$ gleiche oder verschiedene, einwertige, SiC-gebundene organische Reste bedeutet und n eine Zahl von mindestens 20, bevorzugt zwischen 100 und 2000, besonders bevorzugt zwischen 500 und 1500, insbesondere zwischen 600 und 1400, ist.

Obwohl durch Formel (II) nicht dargestellt, können bis zu 10 Molprozent der Diorganosiloxaneinheiten durch andere Siloxaneinheiten, wie beispielsweise $R^2SiO_{3/2}$- und/oder $SiO_{4/2}$-Einheiten, ersetzt sein, wobei $R^2$ die oben dafür angegebene Bedeutung hat. Des weiteren können die Organopolysiloxane gemäß Formel (II) - obwohl ebenfalls nicht in Formel (II) dargestellt - herstellungsbedingt bis zu 10 Molprozent andere funktionelle Gruppen, wie beispielsweise $HR^2SiO$- und $HSiO_{3/2}$-Gruppen, enthalten.

Bei dem Rest $R^2$ handelt es sich bevorzugt um gegebenenfalls substituierte Kohlenwasserstoffreste mit 1 bis 18 Kohlenstoffatomen.

Beispiele für Reste $R^2$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste und Aralkylreste, wie der Benzylrest, der $\alpha$- und der $\beta$-Phenylethylrest.

Weitere Beispiele für Reste $R^2$ sind lineare oder verzweigte oder cyclische, mit Acryloxy-, Methacryloxy-, Epoxy-, Allyl-, Cyclohexenyl-, Cyanogruppen und/oder mit Halogenatomen substituierte Kohlenwasserstoffreste.

Beispiele für substituierte Reste $R^2$ sind Cyanalkylreste, wie der $\beta$-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Besonders bevorzugt als Reste $R^2$ sind Methyl-, Ethyl- und n-Propylreste, insbesondere der Methylrest.

Vorzugsweise sind schon wegen der leichten Zugänglichkeit mindestens 90 % der Anzahl der Reste $R^2$ in Formel (II) Methylreste.

Bei dem erfindungsgemäß eingesetzten $\alpha,\omega$-Dihydroxydiorganopolysiloxan kann es sich um gleiche oder verschiedene Homo- oder Mischpolymerisate handeln, wobei die einzelnen Moleküle gleiche oder verschiedene Kettenlänge aufweisen können.

Die erfindungsgemäß eingesetzten $\alpha,\omega$-Dihydroxyorganopolysiloxane besitzen bei 25°C vorzugsweise eine Viskosität von 1 000 bis 400 000 $mm^2/s$, besonders bevorzugt von 20 000 bis 350 000 $mm^2/s$.

Beispiele für die erfindungsgemäß eingesetzten $\alpha,\omega$-Dihydroxyorganopolysiloxane gemäß Formel (II) sind $\alpha,\omega$-Dihydroxydimethylpolysiloxane, $\alpha,\omega$-Dihydroxydimethyl/methylvinylcopolysiloxane, $\alpha,\omega$-Dihydroxydimethyl/methylphenylcopolysiloxane und $\alpha,\omega$-Dihydroxydimethyl/methyl-3,3,3-trifluor-n-propylcopolysiloxane.

Die in den erfindungsgemäßen Massen eingesetzten $\alpha,\omega$-Dihydroxyorganopolysiloxane sind handelsübliche Produkte bzw. nach in der Siliciumchemie bekannten Verfahren herstellbar.

Bei den Resten R handelt es sich vorzugsweise um Kohlenwasserstoffreste mit 1 bis 10 Kohlenstoffatomen, die durch Alkoxygruppen mit 1 bis 3 Kohlenstoffatomen und anderen nichtalkalischen, organischen Resten substituiert sein können.

Beispiele für die Reste R sind die für den Rest $R^2$ angegebenen Beispiele für Kohlenwasserstoffreste mit 1 bis 10 Kohlenstoffatomen, $-CH_2CH_2OCH_3$, $-CH_2CH_2-OOCCH_3$, $-CH_2COOC_4H_9$, $-CH_2-C(O)CH_3$ sowie Reste der allgemeinen Formel $-(SiR^2_2O)_rSiR^2_3$ mit $R^2$ gleich der obengenannten Bedeutung und r = 0 bis 100, wie beispielsweise der $Me_3Si$-, $Ph_3Si$- und $CH_2=CH(SiMe_2O)_3SiMe_2$-Rest mit Me gleich Methylrest und Ph gleich Phenylrest.

Besonders bevorzugt handelt es sich bei den Resten R jeweils unabhängig voneinander um den Methyl-, Ethyl-, n-Propyl-, iso-Propylrest und $CH_3OCH_2CH_2$-Rest, insbesondere um den Ethylrest.

Bei dem Rest $R^1$ handelt es sich bevorzugt um zweiwertige lineare Reste der Formel $-(C_qH_{2q-o}R'_o)-$, worin R' einen nichtalkalischen organischen Rest, wie etwa gegebenenfalls substituierte Alkyl- oder Arylreste, HO-, R"O-, R"-COO- und R"-CO- mit R" gleich organischem Rest, bedeutet, q gleich einer Zahl von 2 bis 20 ist und o gleich 0 oder eine Zahl von 1 bis 10 ist,
zweiwertige cyclische Reste der Formel $-(C_jH_{2j-2-1}R'_1)-$, worin R' eine der obengenannten Bedeutung hat, j eine Zahl von 3 bis 8 ist und 1 0 oder eine Zahl von 1 bis 8 ist, sowie um
zweiwertige aromatische, gegebenenfalls mit R' substituierte Reste mit 6 bis 20 Kohlenstoffatomen.

Beispiele für Rest $R^1$ sind Methylen-, Ethylen-, n-Propylen-, iso-Propylen-, 1-n-Butylen-, 2-n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest und Decylenreste, wie der n-Decylenrest, sowie Cycloalkylenreste, wie Cyclopentylen-, Cyclohexylen-, Cycloheptylenreste und Methylcyclohexylenreste, Cyanalkylenreste, wie der $\beta$-Cyanethylenrest, und halogenierte Kohlenwasserstoff-

reste, beispielsweise Halogenalkylenreste, wie der 3,3,3-Trifluor-n-propylenrest, der 2,2,2,2',2',2'-Hexafluorisopropylenrest, und Halogenarylenreste, wie der o-, m-, und p-Chlorphenylenrest sowie gegebenenfalls substituierte m- oder p-Propyloxyphenylenreste, 1,4-Phenylen-, 1,3-Phenylen-, 4,4'-Biphenylen-, 3,3'-Biphenylen-, 3,4'-Biphenylen-, 1,4-Naphthalindiyl-, 1,5-Naphthalindiyl-, 1,4-Anthrachinondiyl-, 1,5-Anthrachinondiyl-, 2,6-Anthrachinondiyl-, Diphenylmethan-4,4'-diyl-, 2,2-Bisphenylpropan-4,4'-diyl-, 2,2-Bisphenylperfluorpropan-4,4'-diyl-, 3,3-Bisphenylphthalid-4,4'-diyl- und Bisphenylsulfon-4,4'-diylrest, 2-Methyl-1,4-phenylen-, 2-Chlor-1,4-phenylen-, 2-Phenyl-1,4-phenylen-, 2-Cyano-1,4-phenylen-, 2,2'-Dimethyl-4,4'-biphenylen- und 3,3'-Dimethyl-4,4'-biphenylenrest.

Besonders bevorzugt handelt es sich bei Rest $R^1$ um zweiwertige lineare Reste $-(CH_2)_{2-8}-$, insbesondere um $-(CH_2)_6-$.

Ein weiterer Gegenstand der vorliegenden Erfindung sind Organosiliciumverbindungen der allgemeinen Formel

$$[HSi(OR)_2O_{1/2}]_a[HSi(OR)O]_b[HSiO_{3/2}]_c[Si(OR)_3O_{1/2}]_d$$
$$[Si(OR)_2O]_e[Si(OR)O_{3/2}]_f[SiO_2]_g[R^1O]_h \qquad (I),$$

worin R gleich oder verschieden sein kann und einen einwertigen, gegebenenfalls substituierten Kohlenwasserstoffrest oder Organosiliciumrest bedeutet sowie $R^1$ a, b, c, d, e, f, g und h die obengenannte Bedeutung haben,
mit der Maßgabe, daß der Gehalt an Si-gebundenem Wasserstoff 0,1 bis 0,9 Gewichtsprozent, bevorzugt 0,2 bis 0,8 Gewichtsprozent, besonders bevorzugt 0,3 bis 0,6 Gewichtsprozent, jeweils bezogen auf das Gesamtgewicht der Organosiliciumverbindung der Formel (I), beträgt sowie mindestens 20 % der Anzahl der Reste R in der Organosiliciumverbindung der Formel (I) die Bedeutung von einwertigem, gegebenenfalls substituierten Kohlenwasserstoffrest haben.

In der Organosiliciumverbindung der Formel (I) haben bevorzugt alle Reste R die Bedeutung von einwertigem, gegebenenfalls substituierten Kohlenwasserstoffrest.

Die erfindungsgemäße Komponente (B) wird vorzugsweise durch Umsetzung von Alkohol (1) mit Teilhydrolysat (2) aus Organyloxysilanen der Formel

$$HSi(OR)_3 \qquad (III)$$

und gegebenenfalls Alkandiolen hergestellt,
worin R gleich oder verschieden sein kann und einen einwertigen, gegebenenfalls substituierten Kohlenwasserstoffrest bedeutet.

Die bei der erfindungemäßen Umsetzung verwendeten Teilhydrolysate (2) werden vorzugsweise gemäß dem in der eingangs zitierten WO 92/21724 beschriebenen Verfahren durch Hydrolyse von Silanen der Formel (III) gegebenenfalls mit einem Alkandiol der allgemeinen Formel $HO-R^1-OH$, wobei $R^1$ die oben angegebene Bedeutung hat, in Gegenwart von sauren Katalysatoren unter Entfernung des gebildeten Alkohols hergestellt. Besonders bevorzugt werden Teilhydrolysate bzw. Teilkondensate von Verbindungen der Formel (III) durch langsame Zugabe von Wasser zu Verbindung der Formel (III) gegebenenfalls im Gemisch mit $HO-R^1-OH$, wobei $R^1$ die obengenannte Bedeutung hat, sowie gegebenenfalls in Anwesenheit von Brönsted-Säuren hergestellt.

Die Herstellung dieser Teilhydrolysate (2) wird vorzugsweise bei einem Druck von 900 bis 1100 hPa und einer Temperatur von 23 bis 220°C, besonders bevorzugt 40 bis 180°C, durchgeführt. Sie kann aber auch bei höheren oder niedrigeren Drücken durchgeführt werden.

Bei den so erhaltenen Teilhydrolysaten (2) handelt es sich vorzugsweise um Siloxanharze der Formel

$$[HSi(OR)_2O_{1/2}]_{a'}[HSi(OR)O]_{b'}[HSiO_{3/2}]_{c'}[Si(OR)_3O_{1/2}]_{d'}$$
$$[Si(OR)_2O]_{e'}[Si(OR)O_{3/2}]_{f'}[SiO_2]_{g'}[R^1O]_{h'} \qquad (I'),$$

wobei R gleich oder verschieden sein kann und einen einwertigen, gegebenenfalls substituierten Kohlenwasserstoffrest bedeutet und
$R^1$, a', b', c', d', e', f', g' und h' jeweils unabhängig voneinander 0 oder eine Zahl größer 0 bedeuten,
mit der Maßgabe, daß der Gehalt an Si-gebundenem Wasserstoff höher ist als in dem Bestandteil (B) der erfindungsgemäßen Massen.

Vorzugsweise liegt der Gehalt an Si-gebundenem Wasserstoff bei 0,8 bis 1,2 Gewichtsprozent, bezogen auf das Gesamtgewicht des Teilhydrolysats (2) der Formel (I').

Vorzugsweise ist in den erfindungsgemäß eingesetzten Teilhydrolysaten (2) der Formel (I') $(a'+b'+c') \geqq [0{,}7\cdot(a'+b'+c'+d'+e'+f'+g'+h')]$, besonders bevorzugt ist $(a'+b'+c') \geqq [0{,}8 \cdot (a'+b'+c'+d'+e'+f'+g'+h')]$.

Bei den eingesetzten Silanen der Formel (III) sowie den Alkandiolen kann es sich selbstverständlich jeweils um eine Art eines Silans bzw. Alkandiols wie auch um ein Gemisch verschiedener Silane bzw. Alkandiole handeln.

Beispiele für Teilhydrolysate (2) sind solche der durchschnittlichen Formel (I') mit

R = Et  a'=32,9  b'=49,9  c'=12,5  d'=4,0  e'=0,7
f'=g'=h'= 0

R = Et  a'=45,0  b'=43,0  c'=12,0  d'=e'=f'=g'=h'= 0

R = Et  a'=33,2  b'=47,5  c'=12,5  d'=5,9  e'=0,9
f'=g'=h'= 0

R = iPr  a'=40,0  b'=45,0  c'=15,0  d'=e'=f'=g'=h'= 0

R = Me  a'=29,4  b'=41,2  c'=13,8  d'=9,4  e'=5,8
f'=0,4  g'=h'= 0,

wobei Et Ethylrest, Me Methylrest und iPr iso-Propylrest bedeutet.

Werden bei der Teilhydrolyse Alkandiole mitverwendet, hat h in Formel (I') einen Wert größer 0.

Die erfindungsgemäße Umsetzung dieser Teilhydrolysate (2), die reich an Si-gebundenem Wasserstoff sind, mit Alkoholen ROH (1), worin R einen einwertigen, gegebenenfalls substituierten Kohlenwasserstoffrest oder Organosiliciumrest bedeutet und gleich oder verschieden von den im Teilhydrolysat (2) vorhandenen Resten R sein kann, erfolgt vorzugsweise in Gegenwart von Katalysatoren (3), welche die Reaktion von Si-gebundenem Wasserstoff mit Hydroxylgruppen beschleunigen.

Beispiele für solche Katalysatoren (3) sind NaOH, KOH, Alkalialkoholate, wie Lithiumethanolat, Kalium-t-butylat und Natriumbutylat, Amine, wie Piperidin und Tetramethylethylendiamin, Hydroxylamine, wie Diethylhydroxylamin, Chlorwasserstoff, saurer Ionenaustauscher, Cu, Ni, Pd, $BF_3$, $ZnCl_2$, $MgCl_2$, LiF, CsF, KF, t-$Butyl_4NF$ und Pd/Co-Komplexe. Hierzu sei beispielsweise auf E. Lukevics, M. Dzintara, J.Organomet.Chem. 295 (1985), 265-315 verwiesen.

Vorzugsweise werden als Katalysatoren (3) bei der erfindungsgemäßen Umsetzung basische Verbindungen eingesetzt. Beispiele hierfür sind basische Metallsalze, wie Natriumhydrogencarbonat, Natriumcarbonat, Magnesiumoxid, Amine, Guanidine, Harnstoffe, Imine, und Hydroxylamine. Besonders bevorzugt werden als Katalysatoren (3) tertiäre Amine, insbesondere Triethylamin, eingesetzt.

Beispiele für Alkohol (1) sind Methanol, Ethanol, Isopropanol, n-Propanol, n-Butanol, Trimethylsilanol und Triphenylsilanol.

Rest R im erfindungsgemäA eingesetzten Alkohol ROH (1) hat vorzugsweise die gleiche Bedeutung wie Rest R im erfindungsgemäß eingesetzten Teilhydrolysat (2) der Formel (I'). Falls in Verbindung ROH (1) R die Bedeutung von Organosiliciumrest hat, soll der Einfachheit halber im Rahmen der vorliegenden Erfindung ebenfalls von Alkoholen gesprochen werden.

Bei der erfindungsgemäßen Umsetzung wird vorzugsweise Teilhydrolysat (2) zusammen mit dem Katalysator (3) vorgelegt und Alkohol (1) gegebenenfalls im Gemisch mit Wasser zudosiert.

Das erfindungsgemäße Verfahren wird vorzugsweise bei Temperaturen zwischen 0 und 120°C, besonders bevorzugt zwischen 15 und 100°C, und einem Druck zwischen 900 und 1100 hPa durchgeführt.

Bei dem erfindungsgemäßen Verfahren kann zusätzlich nichtprotisches Lösungsmittel eingesetzt werden, sofern das Lösungsmittel die gewünschte Reaktion nicht beeinträchtigt.

Beispiele für gegebenenfalls eingesetzte Lösungsmittel sind aliphatische Kohlenwasserstoffe, wie Fraktionen aus der Erdölraffinierung, Pentan, Hexan, Heptan und Octan, aromatische Kohlenwasserstoffe, wie Benzol, Toluol, o-Xylol, m-Xylol und p-Xylol, (teil)halogenierte Kohlenwasserstoffe, wie $CCl_4$, Chloroform und Perchlorethylen, Ether, wie Diethylether, Dibutylether, Methyl-t-butylether, 1,2-Dimethoxyethan, dimethylierte Polyethylenglykole, Tetrahydrofuran und Dioxan, Carbonsäureester, wie Essigsäuremethylester, Essigsäureethylester, Essigsäurebutylester und Ameisensäureethylester, Ketone, wie Aceton, Methylethylketon, Methyl-t-butylketon und Methyl-sek-butylketon, sowie Gemische der vorgenannten Lösungsmittel. Die Bezeichnung Lösungsmittel bedeutet nicht, daß sich alle Reaktionsteilnehmer darin lösen müssen.

Bei dem erfindungsgemäßen Verfahren wird das Verhältnis von Alkohol (1) zu Teilhydrolysat (2) so gewählt, daß Organosiliciumverbindung der Formel (I) mit dem gewünschten Gehalt an Si-gebundenem Wasserstoff von 0,1 bis 0,9 Gewichtsprozent entsteht. Bei einem Gehalt an Si-gebundenem Wasserstoff größer 0,9 Gewichtsprozent muß bei längerer Lagerzeit der vernetzungsfähigen Abmischung unter Luftausschluß mit einer unerwünschten Wasserstoffentwicklung gerechnet werden. Ein Gehalt an Si-gebundenem Wasserstoff kleiner 0,1 Gewichtsprozent bedeutet, daß u.a. die Hautbildungszeiten in Gegenwart schwacher Brönsted-Säuren zu groß werden.

Beispiele für die erfindungsgemäßen Organosiliciumverbindungen der durchschnittlichen Formel (I) sind:

R = Et a=7,3 b=6,4 c=1,3 d=31,6 e=40,7
f=12,7 g=h=0 (0,1%H/73,6%EtO),

R = Et a=19,0 b=24,0 c=7,0 d=12,0 e=25,0
f=13,0 g=h=0 (0,43%H/62,4%EtO),

R = Et a=15,4 b=24,2 c=11,4 d=5,5 e=20,5
f=18,7 g=4,3 h = 0 (0,49%H/56,2%EtO),

R = Et a=21,6 b=29,3 c=10,4 d=6,1 e=19,1
f=11,9 g=1,6 h = 0 (0,57%H/50,4%EtO),

R = Et a=25,8 b=30,6 c=10,0 d=9,0 e=15,8
f=8,7 g=h=0 (0,6%H/60,8%EtO),

R = Et a=20,3 b=13,9 c=4,3 d=18,8 e=30,6
f=12,0 g=h=0 (0,3%H/66,1%EtO),

R = Et a=33,5 b=28,0 c=8,6 d=10,9 e=14,1
f=4,6 g=0,2 h = 0 (0,61%H/63,1%EtO),

R = iPr a=34,9 b=37,3 c=7,8 d=3,2 e=7,0
f=9,8 g=h=0 (0,63%H/65,8%iPrO),

R = 38%Et/62%iPr $H\text{-}SiO_{3/2} : SiO_2 = 1 : 0,833$
(0,45%H/19,9%EtO/43,2%iPrO) und

R = Et a=33,3 d=33,3 h=33,3 b=c=e=f=g=0
$R^1 = -(CH_2)_6-$ (56,5%EtO/0,25%H),

wobei sich die prozentualen Angaben auf das Gewicht beziehen und Et Ethylrest sowie iPr iso-Propylrest bedeutet.

Bei der erfindungsgemäß eingesetzten Komponente (B) kann es sich um eine einzelne Art wie auch um ein Gemisch aus mindestens zwei verschiedenen Arten von Organosiliciumverbindungen der Formel (I) handeln.

Vorzugsweise handelt es sich bei den erfindungsgemäßen, unter Abspaltung von Alkoholen zu Elastomeren vernetzbaren Organopolysiloxanmassen um solche, die herstellbar sind aus, jeweils bezogen auf das Gesamtgewicht der Organopolysiloxanmasse,

(A) 20 bis 98 Gewichtsprozent, bevorzugt 40 bis 80 Gewichtsprozent, besonders bevorzugt 30 bis 70 Gewichtsprozent, $\alpha,\omega$-Dihydroxyorganopolysiloxan,

(B) 1 bis 50 Gewichtsprozent, bevorzugt 2 bis 30 Gewichtsprozent, besonders bevorzugt 3 bis 20 Gewichtsprozent, Organosiliciumverbindung der Formel (I),

(C) 0 bis 50 Gewichtsprozent, bevorzugt 0,5 bis 10 Gewichtsprozent, besonders bevorzugt 1 bis 7 Gewichtsprozent, Additive,

(D) 0 bis 70 Gewichtsprozent, bevorzugt 1 bis 60 Gewichtsprozent, besonders bevorzugt 5 bis 50 Gewichtsprozent, Füllstoff,

(E) 0 bis 70 Gewichtsprozent, bevorzugt 0 bis 60 Gewichtsprozent, besonders bevorzugt 10 bis 50 Gewichtsprozent, Weichmacher,

(F) 0 bis 20 Gewichtsprozent, bevorzugt 0 bis 10 Gewichtsprozent, besonders bevorzugt 1 bis 8 Gewichtsprozent, Haftvermittler,

(G) 0 bis 20 Gewichtsprozent, bevorzugt 0 bis 10 Gewichtsprozent, besonders bevorzugt 1 bis 8 Gewichtsprozent, Scavenger und

(H) 0 bis 10 Gewichtsprozent, bevorzugt 0,01 bis 5 Gewichtsprozent, besonders bevorzugt 0,1 bis 3 Gewichtsprozent, Kondensationskatalysator.

Die in den erfindungsgemäßen Organopolysiloxanmassen eingesetzten Füllstoffe (D), Weichmacher (E), Haftvermittler (F), Scavenger (G), Kondensationskatalysator (H) und Additive (C) können jeweils die gleichen sein, die auch bisher in unter Abspaltung von Alkoholen zu Elastomeren vernetzbaren Organopolysiloxanmassen verwendet werden konnten, wobei basisch wirkende Bestandteile weniger geeignet sind, da sie die Lagerstabilität der Organopolysiloxanmassen herabsetzen.

Beispiele für Füllstoffe (D) sind beispielsweise nicht verstärkende Füllstoffe, also Füllstoffe mit einer BET-Oberfläche von bis zu 50 $m^2/g$, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 $m^2/g$, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Beispiele für Weichmacher (E) sind bei Raumtemperatur flüssige, durch Trimethylsiloxygruppen endblockierte Dimethylpolysiloxane sowie monofunktionelle öle, wie z.B. $(CH_3)_3SiO(Si(CH_3)_2O)_{40}H$ oder statistische Gemische aus monohydroxyfunktionellen, dihydroxyfunktionellen und in den endständigen Einheiten Triorganosilylgruppen aufweisenden Diorganopolysiloxanen, Polyglykolether, wie z.B. $(HO(CH_2CH_2O)_xCH_3$ und $CH_3O(CH_2CH_2O)_xCH_3$, sowie hochsiedende Kohlenwasserstoffe, wie zum Beispiel Paraffinöle.

Beispiele für die in den erfindungsgemäßen Organopolysiloxanmassen eingesetzten Haftvermittler (F) sind Silane und Organopolysiloxane mit funktionellen Gruppen, wie beispielsweise solche mit Aminoalkyl-, Glycidoxypropyl- oder Methacryloxypropylresten sowie Tetraalkoxysilane, Harnstoffderivate, Isocyanurate oder SiH-funktionelle Organopolysiloxane mit oder ohne zusätzlich organofunktionellen Einheiten.

Als Scavenger (G) sind alle Verbindungen geeignet, die in der Lage sind, die Lagerstabilität der erfindungsgemäßen Organopolysiloxanmassen herabsetzende Moleküle, wie beispielsweise Wasser, Alkohol oder Silanole, abzufangen.

Beispiele für solche Scavenger (G) sind Silane der Formel

$$R^4_{4-k}SiZ_k \qquad (IV)$$

worin $R^4$ gleich oder verschieden sein kann und eine der Bedeutungen von $R^2$ hat, Z eine leicht abspaltbare Gruppe bedeutet, wie beispielsweise

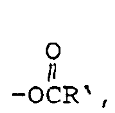

-NR"-CO-NR"$_2$ und -OR"', wobei R', R" und R"' jeweils gleich oder verschieden sein können und einen organischen Rest bedeuten, k 1, 2, 3 oder 4 ist, wie beispielsweise Triacetoxymethylsilan, Di(N-methylacetamido)dimethylsilan und Diacetoxydimethylsilan, sowie Carbonsäureanhydride, Carbonsäureester, Isocyanate und Molekularsiebe. Insbesondere zum Abfangen von molekularem Wasserstoff eignen sich als Scavenger

ungesättigte organische Verbindungen gemäß US-A 4,489,191 (General Electric Company; ausgegeben am 18. Dezember 1989).

Beispiele für Kondensationskatalysator (H) sind (Organo)Metallverbindungen, wie beispielsweise Titanate, organische Zinnverbindungen, Zink- und Cobaltverbindungen, saure, von Metallatomen freie Katalysatoren, wie z.B. Carbonsäuren, und basische, von Metallatomen freie Katalysatoren, wie z.B. Amin.

Bevorzugt unter diesen Kondensationskatalysatoren sind saure, von Metallatomen freie Katalysatoren, wie beispielsweise Carbonsäuren oder Teilester von Di-, Tri- und Tetracarbonsäuren, wie z.B. der Malonsäuremono-(2-ethylhexyl)ester, wobei Carbonsäuren, wie beispielsweise Hexansäure, 2-Ethylhexansäure, Laurinsäure, Malonsäure und ölsäure, besonders bevorzugt eingesetzt werden.

Des weiteren können als Bestandteil (H) auch Verbindungen eingesetzt werden, die erst bei Zutritt von Wasser ihre Wirkung als saure Katalysatoren entfalten, wie beispielsweise Carbonsäureanhydride und Acyloxysilane, wie etwa Acetoxysilane.

Beispiele für Additive (C) sind Pigmente, Farbstoffe, Riechstoffe, Fungicide, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel.

Darüberhinaus können in den erfindungsgemäßen Organopolysiloxanmassen noch andere Bestandteile als die Bestandteile (A) bis (H) eingesetzt werden. Dies können die gleichen sein, die auch bisher in unter Abspaltung von Alkoholen zu Elastomeren vernetzbaren Organopolysiloxanmassen verwendet werden konnten, wobei basisch wirkende Bestandteile weniger geeignet sind, da sie die Lagerstabilität der Organopolysiloxanmassen herabsetzen.

Beispiele für solche anderen Bestandteile sind Silane der Formel

$$R^5_mSi(OR^6)_{4-m} \qquad (V),$$

worin $R^5$ eine für $R^2$ angegebene Bedeutung hat, $R^6$ einen einwertigen, gegebenenfalls substituierten Kohlenwasserstoffrest bedeutet und m 0 oder 1 ist, oder deren Teilhydrolysate bzw. Teilkondensate, wie Hexamethoxydisiloxan, harzartige Organopolysiloxane, einschließlich solcher aus $R^5_3SiO_{1/2}$- und $SiO_{4/2}$-Einheiten mit $R^5$ gleich eine der oben dafür angegebenen Bedeutung, rein-organische Harze, wie Homo- oder Mischpolymerisate des Acrylnitrils, Styrols, Vinylchlorids oder Propylens, Korrosionsinhibitoren, Polyglykole, die verestert und/oder verethert sein können, Lösungsmittel sowie Gemische aus mindestens zwei Arten derartiger Bestandteile.

Als weitere Bestandteile der erfindungsgemäßen Organopolysiloxanmassen können auch radikalisch vernetzbare Verbindungen eingesetzt werden, die z.B. durch Erwärmung auf eine bestimmte Temperatur oder durch Bestrahlung mit elektromagnetischer Strahlung eine weitere Vernetzung der erfindungsgemäßen Abmischungen ermöglichen. Es lassen sich damit meist kürzere Hautbildungszeiten, wie etwa im Sekundenbereich realisieren. Beispiele für solche Verbindungen sind in WO 93/00405 (Wacker-Chemie GmbH; ausgegeben am 7. Januar 1993) beschrieben, wie z.B. Siloxan B1 gemäß Beispiel 1 b), $\alpha,\omega$-Bis(acryloxy-n-propyl)diorganopolysiloxan mit durchschnittlich 190 Siloxan-Einheiten, welches als Diorganosiloxygruppen neben Dimethylsiloxyeinheiten 4 Vinylmethyleinheiten und 2 $HS(CH_2)_3SiCH_3O_{2/2}$-Einheiten enthält, Siloxan AB1 gemäß Beispiel 6 a), Mischungen gemäß Beispiel 2 und $\alpha,\omega$-Dihydroxydiorganopolysiloxane mit Vinyl- und Thioleinheiten, wie z.B. die Vorstufe zu Siloxan AB1 gemäß Beispiel 6 a).

Darüberhinaus können in diesen speziellen Abmischungen Radikalbildner, wie Azoverbindungen, Peroxide oder Photoinitiatoren, wie z.B. Acyloine und Benzophenonketale, zur Beschleunigung der radikalischen Vernetzung zugesetzt werden. Der Anteil dieser radikalisch vernetzbaren Bestandteile in den erfindungsgemäßen Organopolysiloxanmassen beträgt gewöhnlich nicht mehr als 50 Gewichtsprozent, vorzugsweise nicht mehr als 20 Gewichtsprozent, besonders bevorzugt nicht mehr als 10 Gewichtsprozent.

Falls eine Verbesserung der Wasserbenetzbarkeit der aus den erfindungsgemäßen Organopolysiloxanmassen erhältlichen Vulkanisate erwünscht ist, kann der Zusatz eines hydrophilen, polyglykolethermodifizierten Polysiloxans wie z.B. beschrieben in der deutschen Anmeldung mit dem Aktenzeichen P 43 30 735.3 (Wacker-Chemie GmbH; angemeldet am 10. September 1993) vorteilhaft sein. Dadurch können Oberflächeneffekte erzielt werden, die z.B. die überstreichbarkeit mit wäßrigen Dispersionsfarben oder die Gleiteigenschaften bei Kontakt mit Substratoberflächen verbessern. Der Anteil dieser Hydrophilmodifier in der erfindungsgemäßen Organopolysiloxanmasse beträgt gewöhnlich nicht mehr als 20 Gewichtsprozent, vorzugsweise nicht mehr als 10 Gewichtsprozent, besonders bevorzugt nicht mehr als 5 Gewichtsprozent.

Bei den einzelnen Bestandteilen (C), (D), (E), (F), (G) und (H) sowie den gegebenenfalls eingesetzten weiteren Bestandteilen der erfindungsgemäßen unter Abspaltung von Alkoholen vernetzbaren Organopolysiloxanmassen kann es sich jeweils um eine Art derartiger Bestandteile wie auch um ein Gemisch aus mindestens zwei Arten derartiger Bestandteile handeln.

Besonders bevorzugt handelt es sich bei den erfindungsgemäßen Organopolysiloxanmassen um solche,

bestehend aus, jeweils bezogen auf das Gesamtgewicht der Organopolysiloxanmasse,

(A) 30 bis 70 Gewichtsprozent $\alpha,\omega$-Dihydroxyorganopolysiloxan,
(B) 3 bis 20 Gewichtsprozent Organosiliciumverbindung der Formel (I),
(C) 1 bis 7 Gewichtsprozent Additive,
(D) 5 bis 50 Gewichtsprozent Füllstoff,
(E) 10 bis 50 Gewichtsprozent Weichmacher,
(F) 1 bis 8 Gewichtsprozent Haftvermittler und
(H) 0,1 bis 3 Gewichtsprozent Kondensationskatalysator.

Zur Bereitung der erfindungsgemäßen Massen können alle Bestandteile der jeweiligen Masse in beliebiger Reihenfolge miteinander vermischt werden. Dieses Vermischen kann bei Raumtemperatur und dem Druck der umgebenden Atmosphäre, also etwa 900 bis 1100 hPa erfolgen. Falls erwünscht, kann dieses Vermischen aber auch bei höheren Temperaturen erfolgen, z.B. bei Temperaturen im Bereich von 35°C bis 135°C. Vorzugsweise wird bei diesem Vermischen der Zutritt von Wasser soweit wie möglich ausgeschlossen.

Für die Vernetzung der erfindungsgemäßen Massen reicht der übliche Wassergehalt der Luft aus. Die Vernetzung kann, falls erwünscht, auch bei höheren oder niedrigeren Temperaturen als Raumtemperatur, z.B. bei -5°C bis 10°C oder bei 30°C bis 50°C durchgeführt werden.

Die erfindungsgemäßen, unter Abspaltung von Alkoholen zu Elastomeren vernetzbaren Organopolysiloxanmassen haben den Vorteil, daß bei sonst konstanten Eigenschaften der unvulkanisierten Masse als auch der Vulkanisate die Vernetzungsgeschwindigkeit in einem annähernd beliebigen Bereich variiert werden kann. So läßt sich z.B. die Hautbildungszeit der erfindungsgemäßen Organopolysiloxanmassen bei gleicher Rezepturzusammensetzung sowohl bezüglich der Mengen als auch der Rezepturbestandteile lediglich durch Variation des Anteils an Si-gebundenem Wasserstoff der Komponente B auf jede beliebige Zeit zwischen 5 Minuten und 500 Stunden einstellen.

Ferner zeichnen sich die erfindungsgemäßen Massen durch eine sehr hohe Lagerstabilität aus. So zeigen diese Massen bei einer Lagerung über einen Zeitraum von mehr als zwölf Monaten selbst bei erhöhter Lagertemperatur, z.B. 40-70°C, zu jedem Zeitpunkt konstante Eigenschaften, speziell ein konstantes Vernetzungsverhalten.

Des weiteren haben die erfindungsgemäßen Massen den Vorteil, daß sie bei einer Lagerung über einen Zeitraum von über zwölf Monaten selbst bei erhöhter Lagertemperatur, z.B. 40-70°C, keine Wasserstoffentwicklung zeigen.

Ein weiterer Vorteil der erfindungsgemäßen bzw. erfindungsgemäß hergestellten, unter Abspaltung von Alkoholen zu Elastomeren vernetzbaren Organopolysiloxanmassen ist, daß sie auch ohne Metallkatalysatoren, die in vielen Fällen aus toxikologischer Sicht bedenklich sind, nur unter Verwendung von milden Kondensationskatalysatoren sehr schnell zu Elastomeren aushärten.

Das erfindungsgemäße Verfahren hat den Vorteil, daß auf sehr einfache Art und Weise Organosiliciumverbindungen mit einem niedrigen Gehalt an Si-gebundenem Wasserstoff hergestellt werden können.

Die erfindungsgemäßen bzw. erfindungsgemäß hergestellten Massen können für alle Verwendungszwecke eingesetzt werden, für die unter Ausschluß von Wasser lagerfähige, bei Zutritt von Wasser bei Raumtemperatur zu Elastomeren vernetzende Organopolysiloxanmassen eingesetzt werden können.

Die erfindungsgemäßen bzw. erfindungsgemäß hergestellten Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

In den folgenden Beispielen werden Shore-A-Härte nach DIN (Deutsche Industrie Norm) 53 505-87, die Reißfestigkeit, die Reißdehnung sowie das Modul (Spannungswert bei 100 % Dehnung) jeweils nach DIN 53504-85S1 und die Weiterreißfestigkeit nach ASTM D624B-73 bestimmt.

Das numerische Mittel $M_n$ sowie das Gewichtsmittel $M_w$ werden mit Hilfe von Gelpermeationschromatographie bestimmt.

Es werden die folgenden Abkürzungen benutzt:

Et für Ethylrest und
iPr für Isopropylrest.

**Beispiel 1**

A) Herstellung von SiH-reichem Teilhydrolysat

Eine Mischung aus 822 g (5 Mol) Triethoxysilan und 0,09 ml Essigsäure wird bei 25°C mit 67,6 g Wasser tropfenweise versetzt. Nach einer Stunde Reaktionsdauer destilliert man bei 80°C/5hPa flüchtige Bestandteile ab und filtriert den Rückstand über 5 g Filterhilfe (käuflich erhältlich unter der Bezeichnung "Seitz-Super" bei Seitz Filterwerke, Bad Kreuznach). Es werden 425,8 g eines farblosen, klaren öls als Rückstand erhalten, das nach $^{29}$Si- und $^{1}$H-NMR-Spektrum folgende Zusammensetzung aufweist:
32,9 Mol% [$HSi(OEt)_2O_{1/2}$]
49,9 Mol% [$HSi(OEt)O$]
12,5 Mol% [$HSiO_{3/2}$]
4,0 Mol% [$Si(OEt)_3O_{1/2}$]
0,7 Mol% [$Si(OEt)_2O$]

Daraus errechnet sich ein Gehalt an Si-gebundenem Wasserstoff von 0,94 Gew.% und ein Ethoxy-Gehalt von 57,5 Gew.%.

Eine Mischung aus 50 g des oben unter A) hergestellten Teilhydrolysats und 0,5 g Triethylamin wird bei 70°C mit 22,5 g Ethanol versetzt. Man läßt zwei Stunden bei 70°C nachreagieren und zieht anschließend am Rotationsverdampfer bei 70°C/1hPa alle flüchtigen Bestandteile ab. Es werden 64 g eines klaren, farblosen Filtrats mit einem numerischen Mittel $M_n$ von 613 und einem Verhältnis von Gewichtsmittel $M_w$ zu numerischem Mittel $M_n$ von 1,50 erhalten, welches nach $^{29}$Si- und $^{1}$H-NMR-Spektroskopie folgende Zusammensetzung aufweist:
7,3 Mol% [$HSi(OEt)_2O_{1/2}$]
6,4 Mol% [$HSi(OEt)O$]
1,3 Mol% [$HSiO_{3/2}$]
31,6 Mol% [$Si(OEt)_3O_{1/2}$]
40,7 Mol% [$Si(OEt)_2O$]
12,7 Mol% [$Si(OEt)O_{3/2}$]

Daraus errechnet sich ein Gehalt an Si-gebundenem Wasserstoff von 0,10 Gew.% und ein Ethoxy-Gehalt von 69,1 Gew.%.

**Beispiel 2**

A) Herstellung von SiH-reichem Teilhydrolysat

Eine Mischung aus 412 g (2 Mol) Triisopropoxysilan und 0,044 ml Essigsäure wird bei 50°C mit 27,2 g (1,51 Mol) Wasser versetzt. Anschließend heizt man zunächst unter Normaldruck, dann bei 15 hPa bis 120°C aus und filtriert über ein Gemisch aus 10 g Filterhilfe (käuflich erhältlich unter der Bezeichnung "Seitz-Super" bei Seitz Filterwerke, Bad Kreuznach) und 1 g Natriumhydrogencarbonat. Als Endprodukt isoliert man 181 g eines klaren, farblosen öls mit einer Viskosität von 10 mm2/s, das nach $^{29}$Si- und $^{1}$H-NMR-Spektrum folgende Zusammensetzung aufweist:
40,0 Mol% [$HSi(OiPr)_2O_{1/2}$]
45,0 Mol% [$HSi(OiPr)O$]
15,0 Mol% [$HSiO_{3/2}$]

Daraus errechnet sich ein Gehalt an Si-gebundenem Wasserstoff von 0,86 Gew.% und ein Isopropoxy-Gehalt von 63,4 Gew.%.

**Beispiel 3**

Eine Mischung aus 100 g des in Beispiel 1 unter A) hergestellten Teilhydrolysats und 1 g Triethylamin wird bei 70°C mit 18 g Ethanol versetzt. Man läßt eine Stunde bei 70°C nachreagieren, zieht anschließend am Rotationsverdampfer bei 70°C/1hPa alle flüchtigen Bestandteile ab und filtriert über 2 g Filterhilfe (käuflich erhältlich unter der Bezeichnung "Seitz-Super" bei Seitz Filterwerke, Bad Kreuznach). Es werden 86 g eines klaren, farblosen Filtrats mit einer Viskosität von 7 mm²/s, einem numerischen Mittel $M_n$ von 857 und einem Verhältnis von Gewichtsmittel $M_w$ zu numerischem Mittel Mn von 1,84 erhalten, welches nach $^{29}$Si- und $^{1}$H-

NMR-Spektroskopie folgende Zusammensetzung aufweist:
19 Mol% [$HSi(OEt)_2O_{1/2}$]
24 Mol% [HSi(OEt)O]
7 Mol% [$HSiO_{3/2}$]
12 Mol% [$Si(OEt)_3O_{1/2}$)
25 Mol% [$Si(OEt)_2O$]
13 Mol% [$Si(OEt)O_{3/2}$]

Daraus errechnet sich ein Gehalt an Si-gebundenem Wasserstoff von 0,43 Gew.% und ein Ethoxy-Gehalt von 62,4 Gew.%.

**Beispiel 4**

Eine Mischung aus 822 g (5 Mol) Triethoxysilan und 0,09 ml Essigsäure wird bei 25°C mit 67,6 g Wasser tropfenweise versetzt. Nach einer Stunde Reaktionsdauer destilliert man bei 100°C/10hPa flüchtige Bestandteile ab, versetzt anschließend mit 4 g Triethylamin und dosiert bei 90°C 60 g (1,3 Mol) Ethanol binnen einer Stunde zu. Es wird eine weitere Stunde bei 70°C gerührt. Nach Abdestillation der flüchtigen Bestandteile bei 100°C/10hPa verbleiben 297 g eines farblosen, klaren Öls mit einer Viskosität von 38 $mm^2/s$ als Rückstand, das nach $^{29}Si$- und $^1H$-NMR-Spektrum folgende Zusammensetzung aufweist:
15,4 Mol% [$HSi(OEt)_2O_{1/2}$]
24,2 Mol% [HSi(OEt)O]
11,4 Mol% [$HSiO_{3/2}$]
5,5 Mol% [$Si(OEt)_3O_{1/2}$]
20,5 Mol% [$Si(OEt)_2O$]
18,7 Mol% [$Si(OEt)O_{3/2}$]
4,3 Mol% [$SiO_2$]

Daraus errechnet sich ein Gehalt an Si-gebundenem Wasserstoff von 0,486 Gew.% und ein Ethoxy-Gehalt von 56,2 Gew.%.

**Beispiel 5**

Die in Beispiel 4 beschriebene Verfahrensweise wird wiederholt mit der Änderung, daß anstelle von 60 g Ethanol 55 g (1,2 Mol) Ethanol eingesetzt werden. Als Endprodukt isoliert man 337 g eines klaren, farblosen Öls, das eine Viskosität von 10 $mm^2/s$ und nach $^{29}Si$- und $^1H$-NMR-Spektrum folgende Zusammensetzung aufweist:
21,6 Mol% [$HSi(OEt)_2O_{1/2}$]
29,3 Mol% [HSi(OEt)O]
10,4 Mol% [$HSiO_{3/2}$]
6,1 Mol% [$Si(OEt)_3O_{1/2}$]
19,1 Mol% [$Si(OEt)_2O$]
11,9 Mol% [$Si(OEt)O_{3/2}$]
1,6 Mol% [$SiO_2$]

Daraus errechnet sich ein Gehalt von Si-gebundenem Wasserstoff von 0,57 Gew.% und ein Ethoxy-Gehalt von 58,8 Gew.%.

**Beispiel 6**

Mit einem Labormischer (Janke&Kunkel RE 162) werden 57,2 Teile $\alpha,\omega$-Dihydroxydimethylpolysiloxan mit einer Viskosität von 80000 $mm^2/s$, 44,0 Teile $\alpha,\omega$-Di(trimethylsiloxy)-dimethylpolysiloxan mit einer Viskosität von 100 $mm^2/s$, 11,0 Teile H-Alkoxyvernetzer, dessen Herstellung in Beispiel 5 beschrieben ist, 0,44 Teile ölsäure sowie 11 Teile hydrophobierte pyrogene Kieselsäure (käuflich erhältlich unter der Bezeichnung "WACKER HDK H15" bei der Wacker-Chemie GmbH) vermischt. Die entstandene Masse wird 30 Minuten lang bei einer Temperatur von 50°C unter Luftausschluß gelagert.

Anschließend evakuiert man 5 Minuten unter Rühren bei einem Druck von 5 hPa.

Die so erhaltene Masse wird in Tuben abgefüllt und bei 50°C gelagert.

Nach der Herstellung der Masse sowie nach 1, 3 und 6 Monaten Lagerung bei 50°C wird jeweils ein Teil der Masse zu einem 2 mm dicken Film verstrichen und die Zeit bis zur Ausbildung einer trockenen Oberfläche (Hautbildungszeit $t_H$) sowie die mechanischen Werte der Elastomere bestimmt. Die Ergebnisse finden sich in Tabelle 1.

Tabelle 1

| Lagerzeit [Monate] | tH [min] | Shore-A-Härte | Reißdehnung [%] | Reißfestigkeit [N/mm²] | Modul [N/mm²] | Weiterreißfestigkeit [N/mm] |
|---|---|---|---|---|---|---|
| 0 | 19 | 25 | 360 | 1,5 | 0,5 | 4,8 |
| 1 | 19 | 28 | 410 | 1,5 | 0,4 | 4,9 |
| 3 | 18 | 27 | 400 | 1,3 | 0,4 | 4,8 |
| 6 | 18 | 28 | 420 | 1,4 | 0,5 | 5,0 |

Es konnte keine Wasserstoffentwicklung im Beobachtungszeitraum festgestellt werden.

**Beispiel 7**

Mit einem Labormischer (Janke&Kunkel RE 162) werden 57,2 Teile α,ω-Dihydroxydimethylpolysiloxan mit einer Viskosität von 80000 $mm^2/s$, 44,0 Teile α,ω-Di(trimethylsiloxy)-dimethylpolysiloxan mit einer Viskosität von 100 $mm^2/s$, 11,0 Teile H-Alkoxyvernetzer, dessen Herstellung in Beispiel 3 beschrieben ist, 0,44 Teile ölsäure sowie 11 Teile hydrophobierte pyrogene Kieselsäure (käuflich erhältlich unter der Bezeichnung "WACKER HDK H15" bei der Wacker-Chemie GmbH) vermischt. Die entstandene Masse wird 30 Minuten lang bei einer Temperatur von 50°C unter Luftausschluß gelagert. Anschließend evakuiert man 5 Minuten unter Rühren bei einem Druck von 0,5 kPa.

Die so erhaltene Masse wird in Tuben abgefüllt und bei 50°C gelagert.

Nach der Herstellung der Masse sowie nach 1, 3 und 6 Monaten Lagerung bei 50°C wird jeweils ein Teil der Masse zu einem 2 mm dicken Film verstrichen und die Zeit bis zur Ausbildung einer trockenen Oberfläche (Hautbildungszeit $t_H$) sowie die mechanischen Werte der Elastomere bestimmt. Die Ergebnisse finden sich in Tabelle 2.

Tabelle 2

| Lagerzeit [Monate] | tH [min] | Shore-A-Härte | Reißdehnung [%] | Reißfestigkeit [N/mm²] | Modul [N/mm²] | Weiterreißfestigkeit [N/mm] |
|---|---|---|---|---|---|---|
| 0 | 45 | 21 | 320 | 1,2 | 0,4 | 4,1 |
| 1 | 43 | 20 | 350 | 1,4 | 0,4 | 4,3 |
| 3 | 43 | 22 | 330 | 1,3 | 0,3 | 4,1 |
| 6 | 40 | 21 | 330 | 1,4 | 0,4 | 4,4 |

Es konnte keine Wasserstoffentwicklung im Beobachtungszeitraum festgestellt werden.

**Beispiel 8**

Mit einem Labormischer (Janke&Kunkel RE 162) werden 57,2 Teile α,ω-Dihydroxydimethylpolysiloxan mit einer Viskosität von 80000 $mm^2/s$, 44,0 Teile α,ω-Di(trimethylsiloxy)-dimethylpolysiloxan mit einer Viskosität von 100 $mm^2/s$, 11,0 Teile H-Alkoxyvernetzer, dessen Herstellung in Beispiel 1 beschrieben ist, 0,44 Teile Ölsäure sowie 11 Teile hydrophobierte pyrogene Kieselsäure (käuflich erhältlich unter der Bezeichnung "WACKER HDK H15" bei der Wacker-Chemie GmbH) vermischt. Die entstandene Masse wird 30 Minuten lang bei einer Temperatur von 50°C unter Luftausschluß gelagert. Anschließend evakuiert man 5 Minuten unter Rühren bei einem Druck von 0,5 kPa.

Die so erhaltene Masse wird in Tuben abgefüllt und bei 50°C gelagert.

Nach der Herstellung der Masse sowie nach 1, 3 und 6 Monaten Lagerung bei 50°C wird jeweils ein Teil der Masse zu einem 2 mm dicken Film verstrichen und die Zeit bis zur Ausbildung einer trockenen Oberfläche (Hautbildungszeit $t_H$) sowie die mechanischen Werte der Elastomere bestimmt. Die Ergebnisse finden sich in Tabelle 3.

**Tabelle 3**

| Lagerzeit [Monate] | tH [d] | Shore-A-Härte | Reißdehnung [%] | Reißfestigkeit [N/mm²] | Modul [N/mm²] | Weiterreißfestigkeit [N/mm] |
|---|---|---|---|---|---|---|
| 0 | 3 | 7 | 220 | 0,6 | 0,1 | 2,3 |
| 1 | 3 | 10 | 270 | 0,7 | 0,1 | 2,7 |
| 3 | 3 | 10 | 210 | 0,9 | 0,1 | 2,9 |
| 6 | 3 | 11 | 250 | 0,8 | 0,1 | 2,5 |

Es konnte keine Wasserstoffentwicklung im Beobachtungszeitraum festgestellt werden.

**Vergleichsbeispiel 1**

Mit einem Labormischer (Janke&Kunkel RE 162) werden 57,2 Teile α,ω-Dihydroxydimethylpolysiloxan mit einer Viskosität von 80000 $mm^2/s$, 44,0 Teile α,ω-Di(trimethylsiloxy)-dimethylpolysiloxan mit einet Viskosität von 100 $mm^2/s$, 11,0 Teile des SiH-reichen Teilhydrolysats, dessen Herstellung in Beispiel 1 unter A) beschrieben ist, 0,44 Teile ölsäure sowie 11 Teile hydrophobierte pyrogene Kieselsäure (käuflich erhältlich unter der Bezeichnung "WACKER HDK H15" bei der Wacker-Chemie GmbH) vermischt. Die entstandene Masse wird 30 Minuten lang bei einer Temperatur von 50°C unter Luftausschluß gelagert. Anschließend evakuiert man 5 Minuten unter Rühren bei einem Druck von 0,5 kPa.

Die so erhaltene Masse wird in Tuben abgefüllt und bei 50°C gelagert.

Nach der Herstellung der Masse sowie nach 1, 3 und 6 Monaten Lagerung bei 50°C wird jeweils ein Teil der Masse zu einem 2 mm dicken Film verstrichen und die Zeit bis zur Ausbildung einer trockenen Oberfläche (Hautbildungszeit $t_H$) sowie die mechanischen Werte der Elastomere bestimmt. Die Ergebnisse finden sich in Tabelle 4.

Tabelle 4

| Lagerzeit [Monate] | tH [min] | Shore-A-Härte | Reißdehnung [%] | Reißfestigkeit [$N/mm^2$] | Modul [$N/mm^2$] | Weiterreißfestigkeit [N/mm] |
|---|---|---|---|---|---|---|
| 0 | 9 | 27 | 330 | 1,4 | 0,6 | 4,8 |
| 1 | 10 | 30 | 310 | 1,4 | 0,6 | 5,0 |
| 3 | 11 | 31 | 320 | 1,3 | 0,6 | 4,7 |
| 6 | 9 | 33 | 280 | 1,2 | 0,6 | 4,3 |

Nach 7-wöchiger Lagerung der Masse bei 50°C wurde anhand des aufgerollten Tubenbodens eine zunehmend stärkere Wasserstoffentwicklung festgestellt, die nach 12 wöchiger Lagerung auch zu Gasblaseneinschlüssen in der Masse führte.

## Patentansprüche

1. Organopolysiloxanmassen, die unter Ausschluß von Wasser lagerfähig sind, bei Zutritt von Wasser jedoch schon bei Raumtemperatur unter Abspaltung von Alkoholen zu Elastomeren vernetzt werden können herstellbar unter Verwendung von
(A) α,ω-Dihydroxyorganopolysiloxan,
(B) Organosiliciumverbindung der allgemeinen Formel

$$[HSi(OR)_2O_{1/2}]_a[HSi(OR)O]_b[HSiO_{3/2}]_c[Si(OR)_3O_{1/2}]_d$$
$$[Si(OR)_2O]_e[Si(OR)O_{3/2}]_f[SiO_2]_g[R^1O]_h \quad (I),$$

wobei
R gleich oder verschieden sein kann und einen einwertigen, gegebenenfalls substituierten Kohlenwasserstoffrest oder Organosiliciumrest bedeutet,
$R^1$ gleich oder verschieden sein kann und einen zweiwertigen, gegebenenfalls substituierten organischen Rest bedeutet,
a, b, c, d, e, f, g und h jeweils unabhängig voneinander 0 oder eine Zahl größer 0 bedeuten,
mit der Maßgabe, daß der Gehalt an Si-gebundenem Wasserstoff 0,1 bis 0,9 Gewichtsprozent, bezogen auf das Gesamtgewicht der Organosiliciumverbindung der Formel (I), beträgt sowie mindestens 20 % der Anzahl der Reste R in der Organosiliciumverbindung der Formel (I) die Bedeutung von einwertigem, gegebenenfalls substituierten Kohlenwasserstoffrest haben,
sowie gegebenenfalls weiteren Stoffen.

2. Organopolysiloxanmassen gemäß Anspruch 1, dadurch gekennzeichnet, daß es sich bei der Komponente (A) um α,ω-Dihydroxydiorganopolysiloxan der allgemeinen Formel

$$HO-(\overset{R^2}{\underset{R^2}{Si}}-O)_nH \qquad (II)$$

handelt, worin $R^2$ gleiche oder verschiedene, einwertige, SiC-gebundene organische Reste bedeutet und n eine Zahl von mindestens 20 ist.

3. Organopolysiloxanmassen gemäß Anspruch 1 oder 2, dadurch gekennzeichnet, daß es sich bei Rest R um einwertige, gegebenenfalls substituierte Kohlenwasserstoffreste handelt.

4. Organopolysiloxanmassen gemäß einem oder mehreren der Ansprüche 1 bis 3, dadurch gekennzeichnet, daß es sich bei Rest R um den Methyl-, Ethyl-, n-Propyl-, iso-Propylrest oder $CH_3OCH_2CH_2$-Rest handelt.

5. Organopolysiloxanmassen gemäß einem oder mehreren der Ansprüche 1 bis 4, dadurch gekennzeichnet, daß in Organosiliciumverbindungen der allgemeinen Formel (I) der Gehalt an Si-gebundenem Wasserstoff 0,2 bis 0,8 Gewichtsprozent, bezogen auf das Gesamtgewicht der Organosiliciumverbindung der Formel (I), beträgt.

6. Organopolysiloxanmassen gemäß einem oder mehreren der Ansprüche 1 bis 5, dadurch gekennzeichnet, daß es sich um solche handelt, die herstellbar sind aus, jeweils bezogen auf das Gesamtgewicht der Organopolysiloxanmasse,
(A) 20 bis 98 Gewichtsprozent $\alpha,\omega$-Dihydroxyorganopolysiloxan,
(B) 1 bis 50 Gewichtsprozent Organosiliciumverbindung der Formel (I),
(C) 0 bis 50 Gewichtsprozent Additive,
(D) 0 bis 70 Gewichtsprozent Füllstoff,
(E) 0 bis 70 Gewichtsprozent Weichmacher,
(F) 0 bis 20 Gewichtsprozent Haftvermittler,
(G) 0 bis 20 Gewichtsprozent Scavenger und
(H) 0 bis 10 Gewichtsprozent Kondensationskatalysator.

7. Organopolysiloxanmassen gemäß einem oder mehreren der Ansprüche 1 bis 6, dadurch gekennzeichnet, daß es sich um solche handelt, bestehend aus, jeweils bezogen auf das Gesamtgewicht der Organopolysiloxanmasse,
(A) 30 bis 70 Gewichtsprozent $\alpha,\omega$-Dihydroxyorganopolysiloxan,
(B) 3 bis 20 Gewichtsprozent Organosiliciumverbindung der Formel (I),
(C) 1 bis 7 Gewichtsprozent Additive,
(D) 5 bis 50 Gewichtsprozent Füllstoff,
(E) 10 bis 50 Gewichtsprozent Weichmacher,
(F) 1 bis 8 Gewichtsprozent Haftvermittler und
(H) 0,1 bis 3 Gewichtsprozent Kondensationskatalysator.

8. Organosiliciumverbindungen der allgemeinen Formel

$$[HSi(OR)_2O_{1/2}]_a[HSi(OR)O]_b[HSiO_{3/2}]_c[Si(OR)_3O_{1/2}]_d$$
$$[Si(OR)_2O]_e[Si(OR)O_{3/2}]_f[SiO_2]_g[R^1O]_h \quad (I),$$

R gleich oder verschieden sein kann und einen einwertigen, gegebenenfalls substituierten Kohlenwasserstoffrest oder Organosiliciumrest bedeutet,

$R^1$ gleich oder verschieden sein kann und einen zweiwertigen, gegebenenfalls substituierten organischen Rest bedeutet,

a, b, c, d, e, f, g und h jeweils unabhängig voneinander 0 oder eine Zahl größer 0 bedeuten,
mit der Maßgabe, daß der Gehalt an Si-gebundenem Wasserstoff 0,1 bis 0,9 Gewichtsprozent jeweils bezogen auf das Gesamtgewicht der Organosiliciumverbindung der Formel (I), beträgt sowie mindestens 20 % der Anzahl der Reste R in der Organosiliciumverbindung der Formel (I) die Bedeutung von einwertigem, gegebenenfalls substituierten Kohlenwasserstoffrest haben.

9. Verfahren zur Herstellung der Organosiliciumverbindungen gemäß Anspruch 8 durch Umsetzung von Alkohol (1) mit Teilhydrolysat (2) aus Organyloxysilanen der Formel

$$HSi(OR)_3 \quad (III)$$

und gegebenenfalls Alkandiolen,
worin R gleich oder verschieden sein kann und einen einwertigen, gegebenenfalls substituierten Kohlenwasserstoffrest bedeutet.

Europäisches Patentamt

# EUROPÄISCHER RECHERCHENBERICHT

Nummer der Anmeldung
EP 95 10 8830

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,X | WO-A-92 21724 (WACKER)<br>* Ansprüche 1-3, 5, 10-13 *<br>--- | 1-9 | C08L83/04 |
| A | EP-A-0 110 251 (GENERAL ELECTRIC)<br>* Ansprüche 1, 2 *<br>--- | 1,8 | |
| A | US-A-5 302 648 (T. FUJIMOTO ET AL.)<br>* Anspruch 1 *<br>----- | 1 | |

| RECHERCHIERTE SACHGEBIETE (Int.Cl.6) |
|---|
| C08K<br>C08L |

Der vorliegende Recherchenbericht wurde für alle Patentansprüche erstellt

| Recherchenort | Abschlußdatum der Recherche | Prüfer |
|---|---|---|
| BERLIN | 22. August 1995 | Hoepfner, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)